# EUROPÄISCHE PATENTANMELDUNG

(11) **EP 1 586 230 A1**
(43) Veröffentlichungstag der Anmeldung: **19.10.2005**
(21) Anmeldenummer: 05075367.2
(22) Anmeldetag: 31.01.2005
(51) Int. Cl.: A01B 63/16, A01B 61/04

(54) **Packerkultivator einer Saatvorrichtung**

(30) Priorität: 23.03.2004 FI 20040441
(62) Teilanmeldung aus: 05396003.5
(71) Anmelder: Junkkari OY, 62375 Ylihärmä (FI)
(72) Erfinder: Tarkkinen, Tapio, 62375 Ylihärmä (FI); Kielinen, Jukka, 62420 Kortesjärvi (FI); Ruokoja, Toni, 62100 Lapua (FI)

(57) **Zusammenfassung**

In dieser Veröffentlichung sind die Walzenrollen einer Saatmaschine beschrieben, mit denen die Abdichtung des Bodens in ungleichmäßigen Bedingungen verbessert werden soll.

Die Walzenrollen umfassen somit einen tragenden Rahmen 1, einen Balken 2, an dem die Ausgleichsschaukel 3 verdreht um den Mittelpunkt A befestigt werden. Ebenfalls weist der Walzenrollensatz Walzenrollen 4 auf, die mit einer vertikal um die Achse D gedrehten Gabel 5 an dem Rahmen 1 des Walzenrollensatzes mittels Konsolen 6 befestigt worden sind. Die Reaktionsstangen 7 und 7' sind von den einander gegenüber liegenden Enden an die Gabeln 5 vertikal verdreht an den Gelenkpunkten R und R' sowie am Balken 2 über den Mittelpunkt A verdrehbaren Schwenkhebel 3 an den Gelenkpunkten S und S' angeschlossen. Die benachbarten Rollen sind somit zu Paaren angeschlossen und gleichen die Unebenheiten des Bodens aus. Die Walzenrollen umfassen natürlich für den Anschluss an die Saatvorrichtung erforderliche an sich bekannte Stellglieder.

## Beschreibung

### Bereich der Erfindung

Die vorliegende Erfindung betrifft einen Walzenrollensatz entsprechend Patentanspruch 1

### Hintergrund der Erfindung

Trotz des Versuchs, die Oberfläche des Feldes gut zu ebnen, bleiben Unebenheiten bestehen. In den Saatvorrichtungen werden im Allgemeinen Laufräder eingesetzt, die hinter der Maschine so angeordnet sind, dass sie den Boden abdichten und die Samen dicht darein walzen. Die Vorrichtungen der Veröffentlichungen FI27897, FI88851 und FI112586 B weisen möglichst primitive Walzenrollen auf, die durch Rollen gebildet werden, die zu einem steifen Klotz verbunden sind. Der Nachteil solcher Walzenrollen ist der ungleichmäßiger Druck, wobei auf den Samenreihen von der Dicke her unterschiedliche Schichten verbleiben, was wiederum zur ungleichmäßiger Keimung der Pflanzen führt. Eine etwas weiter entwickelte Version ist in der Veröffentlichung FI92546 zu finden, bei der der Walzenklotz mit Hydraulik ausgeglichen wird. Nachteilig ist hier das zufällige Geraten der kompletten Maschine auf ein Rad, wobei sie zu Bruch kommen kann. In den Veröffentlichungen FI5595 und FI880518 wird eine noch weiter entwickelte Version vorgestellt, bei der die Räder paarweise am gleichen Arm angeordnet sind. Auf Grund der Unebenheit des Feldes ist es augenscheinlich, wie eines der zusammengesetzten Räder ganze Zeit in unterschiedlicher Tiefe in Bezug auf den Boden zu laufen scheint. In der Veröffentlichung FI973192 ist versucht worden, dieses Problem zu beheben, jedoch beim Neigen des Rads gerät es von der gewalzten Reihe seitlich herunter.

### Kurze Beschreibung der Erfindung

Die vorliegende Erfindung soll Missstände der bekannten Technik beseitigen und eine völlig neuartige Lösung für die Konstruktion und Funktion der Walzenrollen erzeugen.

Dieser Zweck wird so erreicht, dass die dieser Erfindung entsprechenden Walzenrollen in den Patentansprüchen definierte Merkmale aufweisen. Insbesondere sind die vorliegenden Probleme zu lösen, indem die Merkmale in der Weise kombiniert werden, wie in dem Merkmalteil des unten aufgeführten Patentanspruchs 1 dargestellt.

Die der Erfindung entsprechenden, die Maschine tragenden Walzenrollen passen sich den Unebenheiten des Bodens an und dichten die Saatreihen sowie stellen eine gleichmäßige Keimung sicher.

### Kurze Beschreibung der Abbildungen

Im Folgenden wird eine der vorteilhaften Ausführungsformen der Erfindung betrachtet, indem auf die beiliegende Zeichnung hingewiesen wird, in der

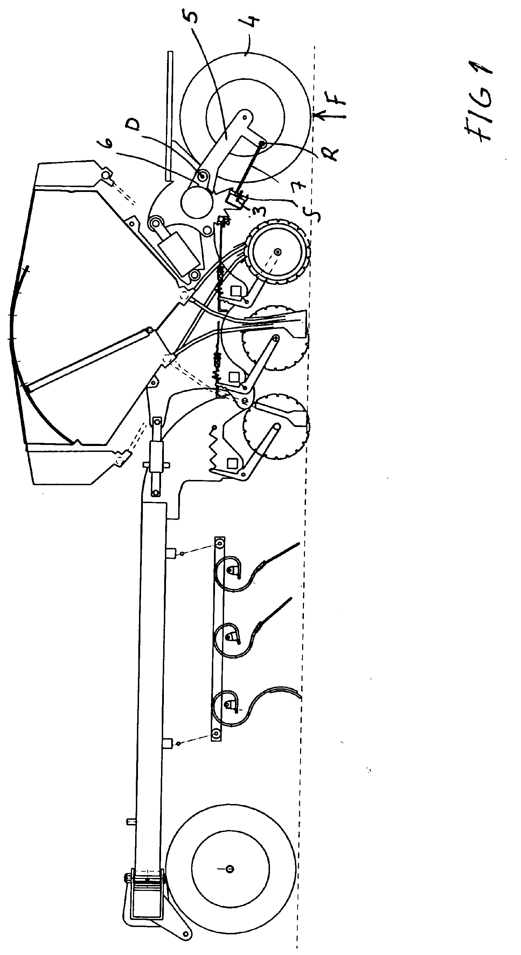

Abbildung 1 die der Erfindung entsprechenden Walzenrollen verbunden mit einer Saatvorrichtung als eine prinzipielle Seitenansicht, teilweise geschnitten zeigt,
in der Abbildung 2 der Walzenrollensatz gezeigt wird

### Detaillierte Beschreibung der vorteilhaften Ausführungsform

Eine vorteilhafte Ausführungsform der vorliegenden Walzenrollen ist im Folgenden unter Hinweis auf die oben aufgeführten Abbildungen beschrieben worden. Dabei umfassen die Walzenrollen die in den Abbildungen mit Referenznummern markierten Bauteile, die den in dieser Erläuterung nachstehend angewandten Referenznummern entsprechen.

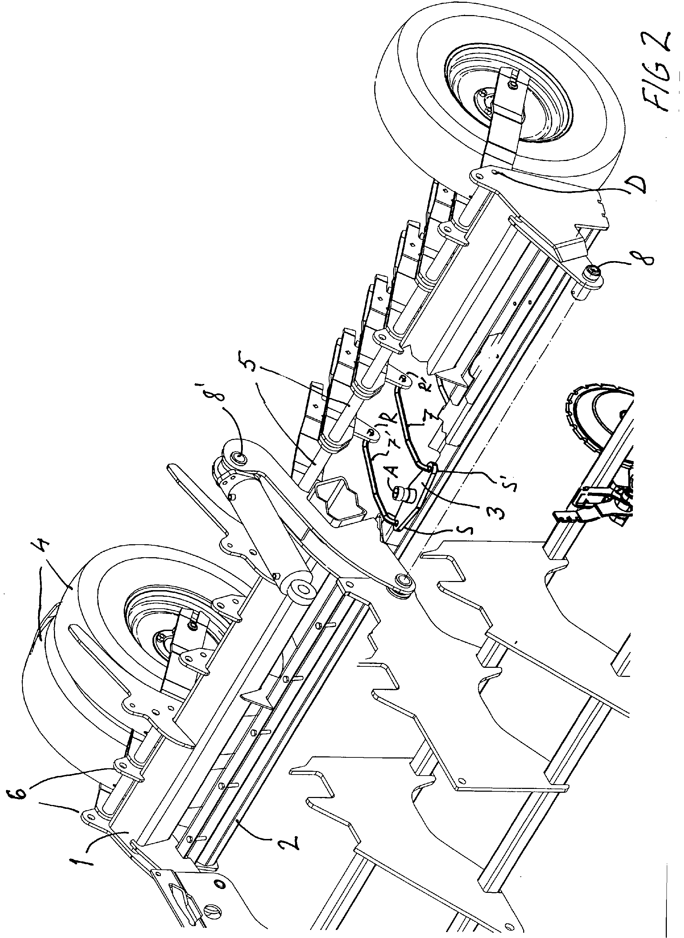

Die Walzenrollen umfassen somit einen tragenden Rahmen 1, einen Balken 2, an dem die Ausgleichsschaukel 3 verdreht um den Mittelpunkt A befestigt werden. Ebenfalls weist der Walzenrollensatz Walzenrollen 4 auf, die mit einer vertikal um die Achse D gedrehten Gabel 5 an dem Rahmen 1 des Walzenrollensatzes mittels Konsolen 6 befestigt worden sind. Die Reaktionsstangen 7 und 7' sind von den einander gegenüber liegenden Enden an die Gabeln 5 vertikal verdreht an den Gelenkpunkten R und R' sowie am Balken 2 über den Mittelpunkt A verdrehbaren Schwenkhebel 3 an den Gelenkpunkten S und S' angeschlossen. Die benachbarten Rollen sind somit zu Paaren verbunden und gleichen die Unebenheiten des Bodens aus. Die Walzenrollen umfassen natürlich für den Anschluss an die Saatmaschine erforderliche an sich bekannte Stellglieder 8 und 8' auf, wie in der Abbildung 2 beispielhaft dargestellt wird.

Die Saatvorrichtung soll auf einer gewünschten Höhe gefahren werden, um eine optimale Funktion des Schars zu gewährleisten. Die Höhenabweichung auf Grund der geringen Unebenheit der Feldoberfläche wird mit einer Hebelübertragung an Rollen ausgeglichen, die nebeneinander zusammen gekoppelt sind, wobei ihre Druckkraft F auf den Boden auch gleich groß ist. Dies wiederholt sich auf der gesamten Breite der Maschine und es ist festgestellt worden, dass unter normalen Bedingungen eine ausgezeichnete Abdichtung der Saatreihe und Walzung der losen Steine in das Feld erzielt wird. Andererseits, da das Ausgleichssystem auf das Rollenpaar begrenzt wird und die verschiedenen Enden des Walzenrollensatzes nicht miteinander verbunden sind, ist der Lauf der Saatvorrichtung stabil und sogar die Überschreitung von Graben und schmalen Brücken möglich.

## Patentansprüche

1. Walzenrollen, die den die Vorrichtung tragenden Rahmen (1) aufweisen, an dem die Walzenrollen (4) mittels der Gabeln (5) und Konsolen (6) vertikal drehbar um die Achse (D) befestigt sind, wobei an den, an den Gabeln vorhandenen Gelenkpunkten (R) und (R') das eine Ende der Reaktionsstangen (7 und 7') befestigt ist, **dadurch gekennzeichnet, dass**
das andere Ende der Reaktionsstangen (7 und 7') an den Walzenrollen über den Lagerpunkt (A) verdreht an den, an den Enden der Ausgleichschaukel (3) vorhandenen Gelenkpunkten (S) und (S') befestigt ist.
